# FASCICULE DE BREVET EUROPEEN

(11) **EP 1 950 405 B1**
(45) Date de publication et mention de la délivrance du brevet: **16.05.2012**
(21) Numéro de dépôt: 08100257.8
(22) Date de dépôt: 09.01.2008
(51) Int. Cl.: F02K 1/38, F02K 1/48

(54) **Mélangeur de flux à section variable pour turboréacteur à double flux d'avion supersonique**
Strömungsmischer mit veränderlichem Querschnitt für Zweistrom-Turbinentriebwerke von Überschallflugzeugen
Variable-section flow mixer for a double-flow jet engine of a supersonic airplane

(30) Priorité: 26.01.2007 FR 0752903
(43) Date de publication de la demande: 30.07.2008
(73) Titulaire: SNECMA, 75015 Paris (FR)
(72) Inventeur: Dussillols, Laurent, Christophe, 77000, Melun (FR); Longeville, Olivier, Roland, 92340, Bourg La Reine (FR); Vuillemin, Alexandre, Alfred, Gaston, 75011, Paris (FR)
(74) Mandataire: Boura, Olivier

(56) Documents cités:
- EP-A- 1 482 160
- WO-A-00/40851
- GB-A- 2 123 486
- US-A- 5 884 843

## Description

### Arrière-plan de l'invention

La présente invention se rapporte au domaine général des mélangeurs de flux à section variable pour turboréacteur double flux à faible taux de dilution d'avion supersonique.

Un turboréacteur double flux à faible taux de dilution pour avion supersonique se compose essentiellement d'un générateur de gaz à double flux (flux froid et flux chaud) se prolongeant par une tuyère qui définit un canal d'éjection des gaz.

Les turboréacteurs double flux à faible taux de dilution équipant les avions supersoniques qui sont destinés au transport civil doivent respecter deux exigences: d'une part, ils doivent posséder la traînée la plus faible possible lors des phases de vol en croisières transsonique et supersonique, et d'autre part, ils doivent présenter un niveau de bruit acceptable au décollage de l'avion, les autorités de certification étant de plus en plus exigeantes face aux émissions acoustiques des turboréacteurs d'avions civils.

Or, ces deux exigences sont contradictoires. En effet, la première exigence conduit à des architectures de turboréacteur à faible diamètre, tandis que la seconde exigence nécessite d'élever la poussée par augmentation du débit de gaz, ce qui amène à de grands diamètres de soufflante (et donc de turboréacteur).

Une solution connue pour respecter ces exigences est l'utilisation d'un mélangeur de flux à section variable. Un tel mélangeur permet d'introduire dans le turboréacteur, lors des phases de décollage de l'avion, un flux d'air externe au turboréacteur pour le mélanger au flux gazeux issu du générateur de gaz. En effet, mélanger de l'air externe au flux gazeux issu du générateur de gaz permet d'augmenter le débit de gaz produit par le turboréacteur. Aussi, à poussées constantes, la vitesse d'éjection des gaz peut être réduite par rapport à un turboréacteur double flux dépourvu de mélangeur. Comme le bruit de jet augmente avec la vitesse d'éjection des gaz, la diminution de cette vitesse engendre une baisse importante du niveau de bruit au décollage.

En pratique, l'air externe est introduit dans le turboréacteur en aval du générateur de gaz en empruntant des ouvertures réparties sur toute la circonférence de la tuyère. L'air ainsi introduit se mélange au flux gazeux issu du générateur de gaz à l'aide de guides qui s'étendent radialement au travers du canal d'éjection du flux gazeux. Ces guides sont mobiles entre une position dans laquelle ils dégagent les ouvertures et permettent le mélange (lors des phases de décollage de l'avion) et une autre position dans laquelle ils obstruent les ouvertures pour les autres phases de vol.

Bien que satisfaisante, cette solution présente l'inconvénient de nécessiter un allongement important du turboréacteur afin de favoriser le mélange entre le flux d'air externe et le flux gazeux issu du générateur de gaz. Or, l'allongement du turboréacteur se fait au détriment de sa masse. En outre, il est généralement nécessaire d'avoir recours à un revêtement acoustique de la paroi interne de la tuyère d'éjection du turboréacteur de manière à absorber les fréquences sonores les plus nuisibles.

On connaît aussi de la demande de brevet français 2896274 déposée par la Demanderesse et du brevet US 5 884 843 un mélangeur dont les guides sont des lobes qui présentent une composante azimutale selon une même direction de façon à donner un mouvement giratoire à l'air externe admis dans le turboréacteur lorsque les lobes sont dans leur position d'ouverture et de la demande de brevet EP 1 482 160 de la même Demanderesse un mélangeur à section fixe dont les lobes présente une composante azimutale et dont le corps centrale présente les rainures avec une composante azimutale.

Bien qu'efficace pour diminuer le niveau de bruit de jet du turboréacteur au décollage dans un encombrement réduit, cette solution engendre néanmoins une perte en poussée due à la giration de l'air externe qui est introduit dans le turboréacteur lorsque les lobes sont dans leur position d'ouverture.

### Objet et résumé de l'invention

La présente invention a donc pour but principal de pallier de tels inconvénients en proposant un mélangeur de flux à section variable qui permet de diminuer le niveau de bruit de jet du turboréacteur au décollage dans un encombrement réduit sans pour autant diminuer la poussée du turboréacteur.

Ce but est atteint grâce à un mélangeur à section variable pour turboréacteur à double flux d'avion supersonique, comportant un corps annulaire central d'axe longitudinal, un capot primaire annulaire entourant de façon coaxiale le corps central pour délimiter avec celui-ci un canal annulaire primaire, un capot annulaire secondaire entourant de façon coaxiale le capot primaire pour délimiter avec celui-ci un canal annulaire secondaire coaxial au canal primaire, et une tuyère annulaire centrée sur l'axe longitudinal et disposée dans le prolongement longitudinal du capot secondaire, la tuyère comportant une pluralité d'ouvertures d'admission d'air externe réparties sur toute sa circonférence, débouchant dans une zone de convergence entre des flux issus des canaux primaire et secondaire et dans lesquelles sont montés des lobes mobiles entre deux positions différentes ; une position fermée dans laquelle ils obstruent les ouvertures de la tuyère et une position déployée dans laquelle ils dégagent lesdites ouvertures et se déploient radialement dans la tuyère de façon à permettre une admission d'air externe dans la zone de convergence, les lobes présentant une même composante azimutale selon une même direction de façon à donner un mouvement giratoire à l'air externe admis dans la zone de convergence lorsque les lobes sont dans la seconde position, mélangeur comportant en outre, conformément à l'invention, une pluralité de rainures longitudinales s'étendant sur une partie au moins du corps central, les rainures présentant une même composante azimutale selon une même direction qui est opposée à celle de la composante azimutale des lobes.

L'utilisation de lobes ayant une composante azimutale favorise considérablement le mélange entre le flux d'air externe au turboréacteur et le flux gazeux issu des canaux primaire et secondaire en créant une giration de l'air externe. La présence de rainures sur le corps central augmente d'avantage ce mélange entre les flux gazeux. En outre, les rainures présentent une composante azimutale selon une direction opposée à celle des lobes ce qui permet de « redresser » le flux d'air mis en giration par les lobes en le vrillant dans le sens inverse. De la sorte, la poussée du turboréacteur n'est pas affectée par l'effet de giration induit par la composante azimutale des lobes du mélangeur.

Le mélangeur comporte avantageusement autant de rainures que de lobes.

De préférence, la composante azimutale des rainures est identique à celle des lobes.

L'invention a également pour objet un turboréacteur pour avion supersonique comportant un mélangeur de flux à section variable tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 et 2 sont des demi vues schématiques en coupe longitudinale d'un turboréacteur muni d'un mélangeur selon l'invention dans ses positions fermée et déployée ;
- la figure 3 est une vue partielle et en perspective du mélangeur en position déployée de la figure 1 ;
- la figure 4 est une vue en coupe selon IV-IV de la figure 1 ;
- la figure 5 est une vue en développée des lobes et des rainures du mélangeur des figures 1 à 4 ; et
- la figure 6 est une vue de face du mélangeur de la figure 2.

### Description détaillée d'un mode de réalisation

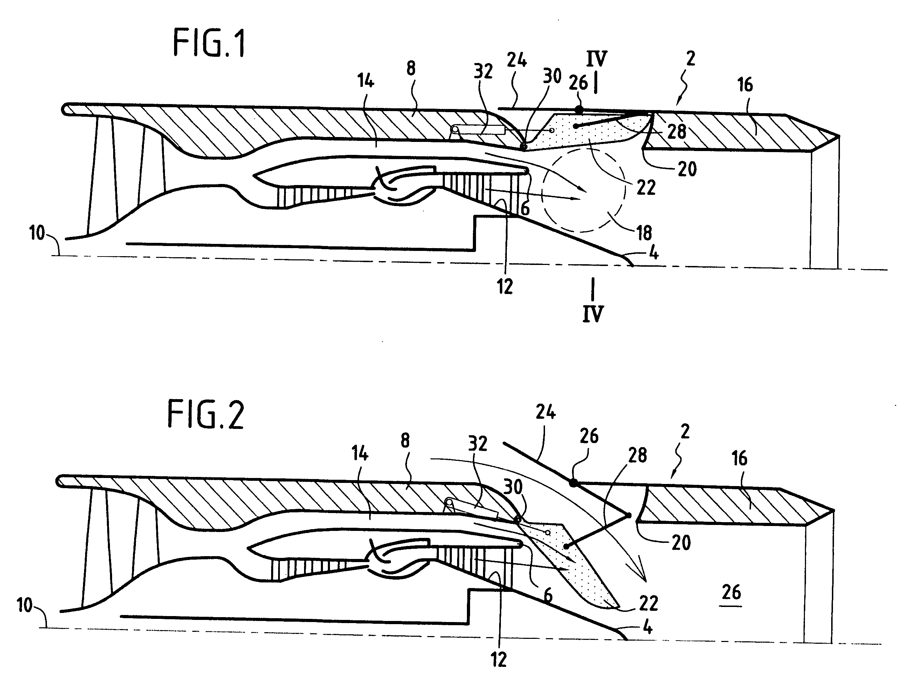

Les figures 1 à 6 représentent un mélangeur de flux à section variable selon l'invention. Ce mélangeur est notamment destiné à équiper un turboréacteur à double flux à faible taux de dilution d'avion supersonique.

Le mélangeur 2 se compose principalement d'un corps annulaire central 4, d'un capot annulaire primaire 6 et d'un capot annulaire secondaire 8, tous ces éléments étant centrés sur un axe longitudinal 10 du turboréacteur.

Le capot primaire 6 entoure le corps central 4 en lui étant coaxial de façon à délimiter avec celui-ci un canal annulaire primaire 12 pour l'écoulement d'un flux gazeux chaud issu du turboréacteur.

Quant au capot secondaire 8, il entoure le capot primaire 6 en lui étant coaxial de manière à délimiter avec celui-ci un canal annulaire secondaire 14 coaxial au canal primaire et destiné à l'écoulement d'un flux d'air froid issu du turboréacteur.

Le mélangeur comporte en outre une tuyère annulaire 16 d'éjection des gaz qui est centrée sur l'axe longitudinal 10 et disposée dans le prolongement longitudinal du capot secondaire 8. Les flux froid et chaud issus du turboréacteur se mélangent à l'intérieur de cette tuyère 16 dans une zone de convergence 18 (figure 1).

La tuyère 16 comporte une pluralité d'ouvertures longitudinales 20 pour l'admission d'air externe qui sont réparties (de préférence, régulièrement) sur toute sa circonférence. Ces ouvertures 20 s'ouvrent vers l'extérieur du turboréacteur et débouchent dans la tuyère sensiblement au niveau de la zone de convergence 18 entre les flux froid et chaud.

On notera que le corps central 4 du turboréacteur s'étend longitudinalement à l'intérieur de la tuyère au-delà des capots primaire 6 et secondaire 8, de sorte que les ouvertures 20 débouchent sensiblement en regard du corps central.

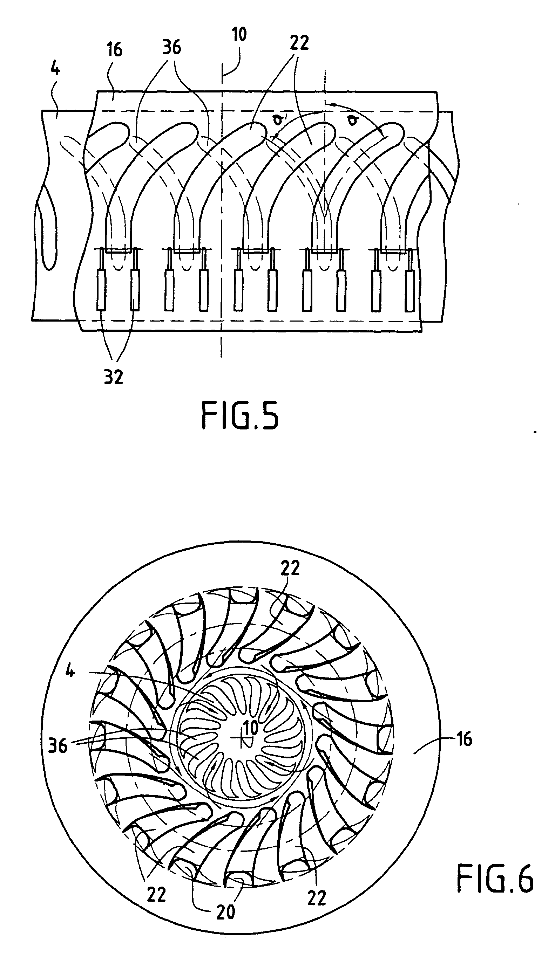

Dans chacune des ouvertures 20 est monté un guide d'air 22 en forme de lobe à section en U qui est mobile entre deux positions différentes : une première position (figures 1, 3 et 4) dite de fermeture dans laquelle le lobe obstrue l'ouverture correspondante et une seconde position (figures 2 et 6) dite de déploiement dans laquelle le lobe dégage l'ouverture correspondante et se déploie radialement dans la tuyère 16.

La position de fermeture des lobes 22 correspond à toutes les phases de vol de l'avion supersonique équipé du turboréacteur, sauf les phases de décollage (il s'agit par exemple des phases de vol en croisière supersonique). Dans cette position, les lobes sont escamotés dans la structure même de la tuyère 16 de façon à obstruer les ouvertures 20. De la sorte, aucun air externe au turboréacteur n'est admis dans la tuyère.

La position déployée des lobes 22 correspond aux phases de décollage de l'avion supersonique équipé du turboréacteur. Dans cette position, les lobes sont déployés afin de s'étendre radialement au travers du canal d'éjection formé par la tuyère (l'axe de chaque lobe est donc incliné par rapport à l'axe longitudinal 10). Ils servent ainsi de guides pour permettre à l'air externe au turboréacteur de s'introduire dans la tuyère 16 par les ouvertures 20 afin de se mélanger aux flux froid et chaud. Grâce à cet apport d'air externe, le débit de gaz produit par le turboréacteur est augmenté lors du décollage de l'avion.

Comme représenté sur les figures 1 et 2, dans chacune des ouvertures 20 d'admission d'air externe est également montée une écope 24 apte à pivoter autour d'un pivot de rotation fixe 26. Chaque écope 24 est en outre reliée par une bielle 28 au lobe 22 correspondant à l'ouverture d'admission d'air externe.

Ainsi, lorsque les lobes 22 se déploient en position d'ouverture (figure 2), les écopes 24 pivotent avec les lobes pour permettre l'admission d'air externe à l'intérieur de la tuyère. De même, lors de la fermeture des lobes (figure 1), les écopes pivotent en sens inverse avec les lobes et masquent les ouvertures 20, empêchant ainsi l'admission d'air externe dans la tuyère.

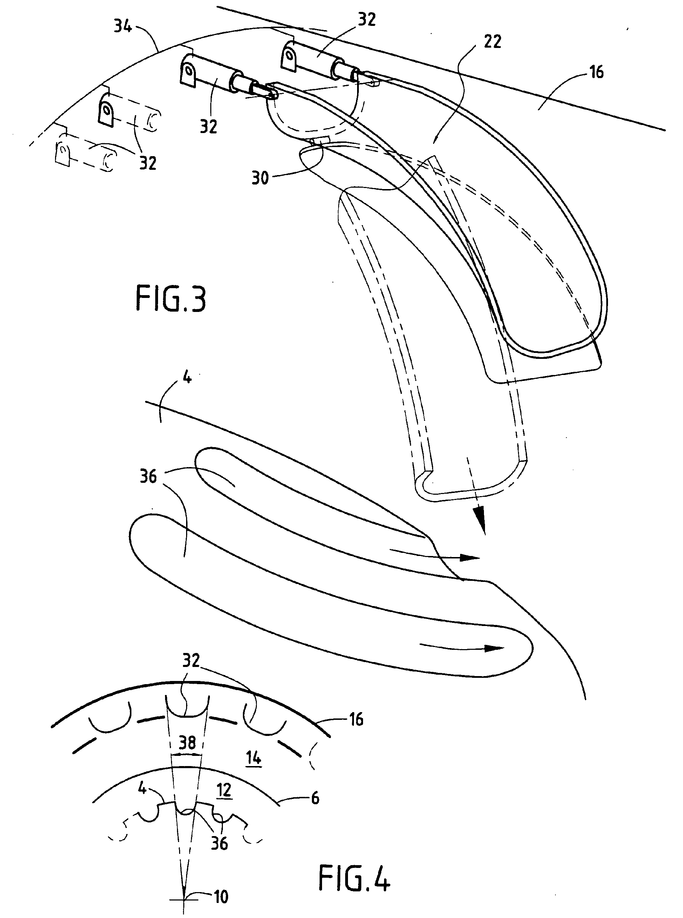

Les lobes 22 sont articulés sur la tuyère 16 à leur extrémité amont par l'intermédiaire d'un pivot de rotation 30 et sont déplacés dans leurs deux positions au moyen d'au moins un vérin 32 (par exemple, hydraulique, pneumatique ou électrique). Comme représenté à la figure 3, la synchronisation du déplacement des lobes peut être assurée par exemple au moyen d'un câble de synchronisation 34 reliant tous les vérins 32 entre eux.

Par ailleurs, les lobes 22 présentent une composante azimutale selon une même direction. Par lobe ayant une composante azimutale, on entend que chaque lobe est courbé de manière à ce que son extrémité aval s'écarte du plan radial de pivotement du lobe.

Comme représenté sur la figure 5, les lobes 22 vus en développé sur la tuyère 16 présentent ainsi chacun une même inclinaison θ variable par rapport à l'axe longitudinal 10. A titre indicatif, l'inclinaison θ peut atteindre jusqu'à 20° environ.

Bien entendu, les ouvertures 20 de la tuyère 16 dans lesquelles sont montés les lobes 22 ont une forme complémentaire à la projection des lobes, c'est-à-dire que leur projection sur la tuyère présente également une inclinaison par rapport à l'axe longitudinal 10.

En outre, la composante azimutale est dirigée dans une même direction pour tous les lobes 22. Ainsi, les lobes sont tous « vrillés » selon la même direction afin de donner un mouvement giratoire à l'air externe admis dans la zone de convergence 18 lorsque les lobes sont dans la position déployée.

Selon l'invention, le mélangeur comporte en outre une pluralité de rainures (ou dépressions) longitudinales 36 qui s'étendent sur une partie au moins du corps central 4, les rainures présentant une même composante azimutale selon une même direction qui est opposée à celle de la composante azimutale des lobes.

Ainsi, sur la figure 5, les rainures 36 vus en développé sur la tuyère 16 présentent également chacun une même inclinaison θ' variable par rapport à l'axe longitudinal 10, cette inclinaison θ' étant de direction opposée à l'inclinaison θ des lobes 22, et de préférence identique (en valeur absolue) à cette inclinaison θ.

De préférence, le corps central 4 présente autant de rainures 36 que de lobes 22. Ainsi, sur l'exemple de réalisation de la figure 6, le mélangeur comporte seize lobes et seize rainures. Les rainures 36 s'étendent longitudinalement sur une partie au moins du corps central.

En outre, comme représenté à la figure 4, chaque rainure 36 présente une largeur qui est sensiblement équivalente à celle des lobes 22. Plus précisément, chaque rainure 36 s'inscrit de préférence dans l'ouverture angulaire 38 dans laquelle s'inscrit le lobe 22 correspondant.

Comme représenté sur la figure 6, la présence des rainures 36 sur le corps central 4 du mélangeur permet de donner au mélange gazeux issu des flux froid et chaud du turboréacteur un mouvement de giration selon une direction qui est opposée au mouvement de giration de l'air externe admis dans la tuyère par les lobes 22. Il en résulte un meilleur mélange entre, d'une part les flux froid et chaud, et d'autre part l'air externe admis par les lobes. Le bruit de jet du turboréacteur au décollage s'en trouve donc réduit. En outre, la présence de ce mouvement de giration du mélange entre les flux froid et chaud permet de « redresser » le flux d'air externe mis en giration par les lobes en le vrillant dans le sens inverse. De la sorte, la poussée du turboréacteur n'est pas diminuée par la forme particulière des lobes.

## Revendications

1. Mélangeur de flux à section variable (2) pour turboréacteur à double flux d'avion supersonique, comportant :
un corps annulaire central (4) d'axe longitudinal (10) ;
un capot primaire annulaire (6) entourant de façon coaxiale le corps central pour délimiter avec celui-ci un canal annulaire primaire (12) ;
un capot annulaire secondaire (8) entourant de façon coaxiale le capot primaire pour délimiter avec celui-ci un canal annulaire secondaire (14) coaxial au canal primaire ; et
une tuyère annulaire (16) centrée sur l'axe longitudinal (10) et disposée dans le prolongement longitudinal du capot secondaire (8), la tuyère (16) comportant une pluralité d'ouvertures d'admission d'air externe (20) réparties sur toute sa circonférence, débouchant dans une zone de convergence (18) entre des flux issus des canaux primaire et secondaire et dans lesquelles sont montés des lobes (22) mobiles entre deux positions différentes ; une position fermée dans laquelle ils obstruent les ouvertures (20) de la tuyère et une position déployée dans laquelle ils dégagent lesdites ouvertures et se déploient radialement dans la tuyère de façon à permettre une admission d'air externe dans la zone de convergence (18) ; les lobes (22) présentant une même composante azimutale selon une même direction de façon à donner un mouvement giratoire à l'air externe admis dans la zone de convergence lorsque les lobes sont dans la seconde position ;
**caractérisé en ce qu'**il comporte en outre une pluralité de rainures longitudinales (36) s'étendant sur une partie au moins du corps central (4), les rainures présentant une même composante azimutale selon une même direction qui est opposée à celle de la composante azimutale des lobes.

2. Mélangeur selon la revendication 1, comportant autant de rainures (36) que de lobes (22).

3. Mélangeur selon l'une des revendications 1 et 2, dans lequel la composante azimutale des rainures (36) est identique à celle des lobes (22).

4. Turboréacteur pour avion supersonique, **caractérisé en ce qu'**il comporte un mélangeur de flux à section variable (2) selon l'une quelconque des revendications 1 à 3.

## Claims

1. A variable-section flow mixer (2) for a double-flow turbojet for a supersonic airplane, the mixer comprising:
· a central annular body (4) about a longitudinal axis (10);
· a primary annular cover (6) coaxially surrounding the central body to co-operate therewith to define a primary annular channel (12);
· a secondary annular cover (8) coaxially surrounding the primary cover to co-operate therewith to define a secondary annular channel (14) coaxial with the primary channel; and
· an annular nozzle (16) centered on the longitudinal axis (10) and placed longitudinally in line with the secondary cover (8), the nozzle (16) having a plurality of external-air admission openings (20) distributed around its entire circumference, opening out into a convergence zone (18) between the flows coming from the primary and secondary channels, and within which lobes (22) are mounted that are movable between two different positions: a closed position in which they obstruct the nozzle openings (20); and a deployed position in which they disengage said openings and deploy radially into the nozzle so as to enable external air to be admitted into the convergence zone (18); the lobes (22) all presenting a common azimuth component in a common direction so as to impart gyratory motion to the external air that is admitted into the convergence zone when the lobes are in the second position;
the mixer being **characterized in that** it further includes a plurality of longitudinal grooves (36) occupying at least a portion of the central body (4), the grooves all presenting a common azimuth component in a common direction that is opposite to the direction of the azimuth component of the lobes.

2. A mixer according to claim 1, having as many grooves (36) as it has lobes (22).

3. A mixer according to claim 1 or claim 2, in which the azimuth component of the grooves (36) is identical to that of the lobes (22).

4. A turbojet for a supersonic airplane, the turbojet being **characterized in that** it includes a variable-section flow mixer (2) according to any one of claims 1 to 3.

## Patentansprüche

1. Strömungsmischer mit variablem Querschnitt (2) für ein Zweistrom-Turboluftstrahltriebwerk eines Überschallflugzeugs, umfassend:
einen mittleren ringförmigen Körper (4) mit einer Längsachse (10),
eine ringförmige Primärverkleidung (6), die den mittleren Körper koaxial umschließt, um mit diesem einen ringförmigen Primärkanal (12) zu begrenzen,
eine ringförmige Sekundärverkleidung (8), welche die Primärverkleidung koaxial umschließt, um mit dieser einen ringförmigen Sekundärkanal (14), der zu dem Primärkanal koaxial ist, zu begrenzen, und
eine ringförmige Düse (16), die um die Längsachse (10) zentriert und in der Längsfortsetzung der Sekundärverkleidung (8) angeordnet ist, wobei die Düse (16) eine Vielzahl von Außenlufteinlaßöffnungen (20) umfaßt, die über ihren gesamten Umfang verteilt sind, die in einen Konvergenzbereich (18) zwischen aus dem Primärkanal und dem Sekundärkanal ausgetretenen Strömen münden und in denen Lappen (22) angebracht sind, die zwischen zwei verschiedenen Positionen beweglich sind, einer geschlossenen Position, in der sie die Öffnungen (20) der Düse verschließen, und einer ausgeklappten Position, in der sie die Öffnungen freigeben und sich in die Düse radial ausklappen, um einen Einlaß von Außenluft in den Konvergenzbereich (18) zu ermöglichen, wobei die Lappen (22) eine gleiche azimutale Komponente entlang einer gleichen Richtung aufweisen, um der in den Konvergenzbereich eingelassenen Außenluft eine Kreisbewegung zu verleihen, wenn die Lappen sich in der zweiten Position befinden,
**dadurch gekennzeichnet, daß** er ferner eine Vielzahl von Längsnuten (36) umfaßt, die sich über wenigstens einen Teil des mittleren Körpers (4) erstrecken, wobei die Nuten eine gleiche azimutale Komponente entlang einer gleichen Richtung, die zu derjenigen der azimutalen Komponente der Lappen entgegengesetzt ist, aufweisen.

2. Mischer nach Anspruch 1, der genauso viele Nuten (36) wie Lappen (22) aufweist.

3. Mischer nach einem der Ansprüche 1 und 2, wobei die azimutale Komponente der Nuten (36) mit derjenigen der Lappen (22) identisch ist.

4. Turboluftstrahltriebwerk für ein Überschallflugzeug, **dadurch gekennzeichnet, daß** es einen Strömungsmischer mit variablem Querschnitt (2) nach einem der Ansprüche 1 bis 3 umfaßt.
